# EUROPEAN PATENT APPLICATION

(11) **EP 2 471 871 A1**
(43) Date of publication of application: **04.07.2012**
(21) Application number: 10821930.4
(22) Date of filing: 01.10.2010
(51) Int. Cl.: C08L 101/00, C08K 3/32, C08K 5/3477, C08K 5/521, C08K 5/5313, C08L 85/02, H01B 3/42, H01B 3/44, H01B 7/08, H01B 7/295

(54) **FLAME-RETARDANT RESIN COMPOSITION, AND INSULATED ELECTRIC WIRE, FLAT CABLE, AND MOLDED ARTICLE, WHICH ARE MADE USING SAME**

(30) Priority: 06.10.2009 JP 2009232278; 11.01.2010 JP 2010003479
(71) Applicant: Sumitomo Electric Industries, Ltd., Osaka-shi, Osaka 541-0041 (JP)
(72) Inventor: MORIUCHI, Kiyoaki, Osaka-shi Osaka 554-0024 (JP); HAYAMI, Hiroshi, Osaka-shi Osaka 554-0024 (JP)
(74) Representative: Setna, Rohan P.
(86) International application number: PCT/JP2010/067234
(87) International publication number: WO 2011/043259

(57) **Abstract**

Provided is a flame-retardant resin composition that can achieve both mechanical properties and flame retardancy and satisfy stringent heat resistance requirement such as heat resistance with a conductor attached, and an insulated wire, a flat cable, and a molded article made using the flame-retardant resin composition. The flame-retardant resin composition contains a thermoplastic resin, a polyfunctional monomer, and an organic phosphorus-based flame retardant. The thermoplastic resin contains 5% by mass or more of a resin having a carbon-carbon unsaturated bond or a resin having a carbonyl group relative to the entire thermoplastic resin. The organic phosphorus-based flame retardant is at least one selected from the group consisting of a metal phosphinate, a melamine phosphate compound, an ammonium phosphate compound, and a polyphosphazene compound obtained by ring-opening polymerization of cyclophosphazene. The content of the organic phosphorus-based flame retardant is 5 to 100 parts by mass relative to 100 parts by mass of the thermoplastic resin and the content of the polyfunctional monomer is 1 to 20 parts by mass relative to 100 parts by mass of the thermoplastic resin.

## Description

### Technical Field

The present invention relates to a flame-retardant resin composition that is composed of a non-halogen flame retardant material and that has high flame retardancy and mechanical properties, and an insulated wire, a flat cable, and a molded article that are made using the composition.

### Background Art

Insulating coating layers of insulated wires and insulating layers of flat cables used in the fields of electronic appliances and automobiles are required to exhibit good mechanical properties. For example, according to the US UL standards widely employed in the field of electronic appliances, insulated wires and flat cables that use plastics such as polyethylene as an insulator require to have an initial maximum tensile strength of 10.4 MPa or more.

Insulated electric wires and flat cables are also used in applications that require high flame retardancy. In general, flame retardancy in the field of automobiles is regulated using a horizontal flame retardant test and an inclined flame test and using a vertical specimen flame test (VW-1 test) of the US UL standards in the field of electronic appliances. Conventionally, a soft polyvinyl chloride composition or a flame-retardant resin composition obtained by mixing a halogen-based flame retardant such as a bromine-based flame retardant or a chlorine-based flame retardant with a polyolefin resin such as polyethylene, an ethylene-ethyl acrylate copolymer, or an ethylene-vinyl acetate copolymer has been used as a material that satisfies the flame retardancy and mechanical properties. However, a flame retardant material containing a halogen element generates combustion gas such as hydrogen halogenide gas harmful to human bodies when burned and is thus not environmentally preferred.

Under these circumstances, materials prepared by blending a metal hydroxide-based flame retardant such as aluminum hydroxide or magnesium hydroxide with a polyolefin resin such as polyethylene, an ethylene-ethyl acrylate copolymer, or an ethylene-vinyl acetate copolymer have been put into practical use (for example, PTL 1). However, in order to achieve flame retardancy acceptable in the vertical specimen flame test VW-1 of the UL standards by using a metal hydroxide-based flame retardant, a large quantity of a metal hydroxide-based flame retardant must be added, and since the mechanical properties are deteriorated as a result, it has been difficult to achieve both flame retardancy and mechanical properties.

A material that contains both a metal hydroxide and red phosphorus and thereby achieves improved flame retardancy is also known. For example, PTL 2 discloses a non-halogen flame-retardant resin composition obtained by blending a metal hydroxide and red phosphorus with a polyolefin-based resin and an insulated wire that uses this composition as a coating material.

### Citation List

### Patent Literature

PTL 1: Japanese Unexamined Patent Application Publication No. 7-145288
PTL 2: Japanese Unexamined Patent Application Publication No. 2003-160709

### Summary of Invention

### Technical Problem

In PTL 2, the amount of the metal hydroxide added can be reduced by using red phosphorus and both flame retardancy and mechanical properties can be achieved. However, since red phosphorus generates toxic phosphine upon undergoing combustion, red phosphorus is not preferred from an environmental perspective. There is also a problem of the insulating layer being colored by red phosphorus.

Although organic phosphorus-based flame retardants such as phosphate esters are known examples of phosphorus-based flame retardants, the flame retarding effect thereof is insufficient and satisfactory flame retardancy is not achieved unless phosphate esters are used in large quantities. Since phosphate esters have low compatibility with polyolefin-based resins, phosphate esters exude on surfaces of resin compositions when added in large quantities, in other words, bleedout occurs.

Flexible Noryl available from SABIC Innovative Plastics Japan LLC (former GE Plastics Japan) uses a mixture of a polyphenylene ether and a styrene-based resin or a thermoplastic styrene-based elastomer as the base polymer and contains an organic phosphorus-based flame retardant (phosphate ester). Since a polyphenylene ether has higher flame retardancy than a polyolefin-based resin, the amount of the organic phosphorus-based flame retardant to be added can be reduced. Flexible Noryl of some grade is used as an electric wire coating material. However, since flexible Noryl cannot be subjected to irradiation crosslinking, the heat resistance and the heat deformation resistance are insufficient.

The inventors of the present invention have developed a flame-retardant resin composition that uses, as a base polymer, a mixture of a polyphenylene ether, a thermoplastic styrene-based elastomer, and an olefin-based resin, and contains an organic phosphorus-based flame retardant, a nitrogen-based flame retardant, and a polyfunctional monomer and an insulated electric wire that uses the flame-retardant resin composition. The inventors have filed a patent application under Application Number 2008-100975. This insulated electric wire has both flame retardancy and mechanical properties and exhibits high heat resistance and heat deformation resistance when the resin is crosslinked.

There are a variety of types of heat resistance required of the insulated electric wires. One of the test items is the heat resistance with a conductor attached. In particular, an insulating layer and a conductor (metal) are brought into contact with each other and left as they are in this state for a long time at high temperature and then the flexibility of the insulating layer is evaluated. It has been found that the insulated electric wire using the above-described flame-retardant resin composition sometimes fails to satisfy the required properties under stringent test conditions. The reason for this is not exactly clear. Presumably, the phosphate ester contained in the flame-retardant resin composition interacts with the metal and deteriorates the properties, or the flexibility of the flame-retardant resin composition is decreased by incorporation of a nitrogen-based flame retardant.

It is an object of the present invention to provide a flame-retardant resin composition that has both mechanical properties and flame retardancy and that can satisfy stringent heat resistance requirements, such as heat resistance with a conductor attached, and an insulated electric wire, a flat cable, and a molded article that are made using the flame-retardant resin composition.

### Solution to Problem

An invention set forth in Claim 1 is a flame-retardant resin composition including a thermoplastic resin, a polyfunctional monomer, and an organic phosphorus-based flame retardant, in which the thermoplastic resin contains 5% by mass or more of a resin having a carbon-carbon unsaturated bond or a resin having a carbonyl group relative to the entire thermoplastic resin, the organic phosphorus-based flame retardant is at least one selected from the group consisting of a metal phosphinate, a melamine phosphate compound, an ammonium phosphate compound, and a polyphosphazene compound obtained by ring-opening polymerization of cyclophosphazene, and the content of the organic phosphorus-based flame retardant is 5 to 100 parts by mass relative to 100 parts by mass of the thermoplastic resin and the content of the polyfunctional monomer is 1 to 20 parts by mass relative to 100 parts by mass of the thermoplastic resin.

The flame retardancy and the heat resistance with a conductor attached can be improved by using at least one selected from the group consisting of a metal phosphinate, a melamine phosphate compound, an ammonium phosphate compound, and a polyphosphazene compound obtained by ring-opening polymerization of cyclophosphazene among organic phosphorus-based flame retardants.

The thermoplastic resin may be freely selected. However, when only resins having low flame retardancy, such as polyethylene and polypropylene, are used, the flame retardancy may become insufficient. Thus, 5% by mass or more of a resin having a carbon-carbon unsaturated bond or a resin having a carbonyl group having high flame retardancy must be contained relative to the entire thermoplastic resin.

The thermoplastic resin preferably contains 5% by mass or more of at least one selected from the group consisting of a polyphenylene ether-based resin, polyethylene terephthalate, polybutylene terephthalate, a thermoplastic polyester elastomer, a thermoplastic polyurethane elastomer, a styrene-based thermoplastic elastomer, a polystyrene-based resin, nylon, a thermoplastic polyamide elastomer, a polyolefin-based resin having a carbon-carbon unsaturated bond, and a polyolefin-based resin having a carbonyl group (Claim 2). These resins have relatively high flame retardancy and thus can help improve the flame retardancy of the flame-retardant resin composition.

The thermoplastic resin preferably contains 5 to 80% by mass of a polyphenylene ether-based resin or a polystyrene-based resin, 20 to 95% by mass of a styrene-based thermoplastic elastomer, and 0 to 70% by mass of a polyolefin-based resin (Claim 3). A polyphenylene ether-based resin and a polystyrene-based resin have particularly high flame retardancy. Styrene-based thermoplastic elastomers have good flexibility, extrusion processability, and compatibility with polyphenylene ether-based resins and can thus help improve the mechanical properties. Polyolefin resins have good flexibility and can help improve mechanical properties and extrusion processability. When these resins are mixed in a well-balanced manner, the mechanical properties and the flame retardancy can be improved.

The thermoplastic resin preferably contains 50 to 100% by mass of an ethylene-α olefin copolymer having a carbonyl group and the ethylene-α olefin copolymer having a carbonyl group has a comonomer content of 9 to 46% by mass and a melt flow rate of 0.3 to 25 g/10 min (Claim 4). An ethylene-α olefin copolymer having a carbonyl group has high flame retardancy and can strike a good balance between properties even when used alone. Note that the melt flow rate (MFR) is a value measured in accordance with ASTM D 1238 at 190°C and a load of 2.16 kg.

A nitrogen-based flame retardant is preferably further contained as a flame retardant in an amount 3 to 100 parts by mass relative to 100 parts by mass of the thermoplastic resin (Claim 5). When the organic phosphorus-based flame retardant and the nitrogen-based flame retardant are used together, the flame retardant properties can be further improved. Melamine cyanurate is preferably used as the nitrogen-based flame retardant (Claim 6).

A phosphate ester is preferably further contained as the organic phosphorus-based flame retardant (Claim 7). When an organic phosphorus-based flame retardant, such as metal phosphinate, having high flame retardancy is used together with an phosphate ester, the flame retardancy of the flame-retardant resin composition is further improved.

An invention set forth in Claim 8 is an insulated wire including a coating layer composed of any of the flame-retardant resin compositions described above. An invention set forth in Claim 9 is a flat cable including an insulating coating layer and a plurality of conductors spaced from one another and arranged side-by-side in the insulating coating layer, in which the insulating coating layer is composed of any of the flame-retardant resin compositions described above. An invention set forth in Claim 10 is a molded article obtained by injection-molding any of the flame-retardant resin compositions described above.

An invention set forth in Claim 11 is the insulated wire set forth in Claim 8 that passes a vertical specimen flame test (VW-1). An invention set forth in Claim 12 is the flat cable set forth in Claim 9 that passes the vertical specimen flame test (VW-1). Advantageous Effects of Invention

According to the present invention, both mechanical properties and flame retardancy can be achieved and a flame-retardant resin composition having particularly high heat resistance and an insulated wire, a flat cable, and a molded article made using the flame-retardant resin composition can be obtained.

### Description of Embodiments

### (Phosphorus-based flame retardant)

Materials that constitute the flame-retardant resin composition of the present invention will now be described. The essential component for the organic phosphorus-based flame retardant is at least one selected from the group consisting of a metal phosphinate, a melamine phosphate compound, an ammonium phosphate compound, and a polyphosphazene compound obtained by ring-opening polymerization of cyclophosphazene. Among these, a metal phosphinate has high flame retardancy and is thus preferred.

A metal phosphinate is a compound represented by formula (I) below. In the formula, R1 and R2 each independently represent an alkyl group having 1 to 6 carbon atoms or an aryl group having 12 or less carbon atoms, M represents calcium, aluminum, or zinc, and if M = Al, then m = 3 and m = 2 in other cases.

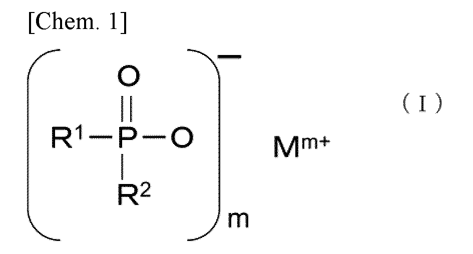

Examples of the metal phosphinate include aluminum salts of organic phosphinic acid such as EXOLIT OP1230, EXOLIT OP1240, EXOLIT OP930, and EXOLIT OP935 produced by Clariant K.K. and a blend of melamine polyphosphate and an aluminum salt of an organic phosphinic acid such as EXOLIT OP1312.

Examples of the melamine phosphate compound include melamine polyphosphate such as MELAPUR200 produced by Ciba Specialty Chemicals Inc., melamine polyphosphate, melamine phosphate, melamine orthophosphate, and melamine pyrophosphate.

Examples of the ammonium phosphate compound include ammonium polyphosphate, amide polyphosphate, amide ammonium polyphosphate, and carbamic acid polyphosphate.

Examples of the polyphosphazene compound obtained by ring-opening polymerization of cyclophosphazene include SPR-100, SA-100, SR-100, SRS-100, and SPB-100L produced by Otsuka Chemical Co., Ltd.

These organic phosphorus-based flame retardants may be used alone or in combination.

The flame retardancy can be further improved by using phosphate ester together with the organic phosphorus-based flame retardant. Examples of the phosphate ester include trimethyl phosphate, triethyl phosphate, triphenyl phosphate, tricresyl phosphate, trixylenyl phosphate, cresyl phenyl phosphate, cresyl 2,6-xylenyl phosphate, 2-ethylhexyl diphenylphosphate, 1,3-phenylenebis(diphenylphosphate), 1,3-phenylenebis(di-2,6-xylenylphosphate), bisphenol-A bis(diphenylphosphate), resorcinol bisdiphenylphosphate, octyl diphenylphosphate, diethylene ethyl ester phosphate, dihydroxy propylene butyl ester phosphate, ethylene disodium ester phosphate, tert-butylphenyl diphenyl phosphate, bis-(tert-butylphenyl) phenyl phosphate, tris-(tert-butylphenyl) phosphate, isopropylphenyl diphenyl phosphate, bis-(isopropylphenyl) diphenyl phosphate, tris-(isopropylphenyl) phosphate, tris-(2-ethylhexyl) phosphate, tris-(butoxyethyl) phosphate, tris-isobutyl phosphate, methylphosphonic acid, dimethyl methylphosphonate, diethyl methylphosphonate, ethylphosphonic acid, propylphosphonic acid, butylphosphonic acid, 2-methyl-propylphosphonic acid, tert-butylphosphonic acid, 2,3-dimethylbutylphosphonic acid, octylphosphonic acid, phenylphosphonic acid, diethylphosphinic acid, methylethylphosphinic acid, methylpropylphosphinic acid, dioctylphosphinic acid, phenylphosphinic acid, diethylphenylphosphinic acid, diphenylphosphinic acid, and alkyl phosphate ester.

The organic phosphorus-based flame retardant content is 5 to 100 parts by mass relative to 100 parts by mass of the thermoplastic resin. When the content is less than 5 parts by mass, the flame retardancy is insufficient. When the content exceeds 100 parts by mass, the mechanical properties are degraded. The organic phosphorus-based flame retardant may be treated with melamine, melamine cyanurate, fatty acid, or a silane coupling agent and used. Alternatively, instead of conducting surface treatment in advance, integral blending by which a surface preparation agent is added during mixing with a thermoplastic resin may be conducted.

Any resin can be used as the thermoplastic resin. However, 5% by mass or more of a resin having a carbon-carbon unsaturated bond or a resin having a carbonyl group such as a polyphenylene ether-based resin, polyethylene terephthalate, polybutylene terephthalate, a thermoplastic polyester elastomer, a thermoplastic polyurethane elastomer, a styrene-based thermoplastic elastomer, a polystyrene-based resin, nylon, a thermoplastic polyamide elastomer, a polyolefin-based resin having a carbon-carbon unsaturated bond, and a polyolefin-based resin having a carbonyl group need be contained with respect to the entire thermoplastic resin.

A polyphenylene ether is an engineering plastic obtained by oxidative polymerization of 2,6-xylenol synthesized from methanol and phenol as raw materials. Various types of materials prepared by melt-blending polystyrene, HIPS, styrene-butadiene rubber, or a hydrogen additive thereof with a polyphenylene ether so as to improve the moldability of polyphenylene ether are commercially available as modified polyphenylene ether resins. The above-mentioned polyphenylene ether resins alone or a polyphenylene ether resin melt-blended with polystyrene, HIPS, styrene-butadiene rubber, or a hydrogen additive thereof may be used as the polyphenylene ether-base resin used in the present invention. A polyphenylene ether having a carboxylic acid such as maleic anhydride introduced therein may be blended and used.

Examples of the polystyrene-based resin include polystyrene prepared by polymerizing styrene and HIPS in which rubber is dispersed. A polystyrene-based resin into which maleic anhydride, an epoxy group, or oxazoline is introduced may be blended and used.

The styrene-based thermoplastic elastomer is a block copolymer including a polystyrene block and a rubber-component block. Examples of the styrene-based thermoplastic elastomer of the present invention include a styrene-ethylenebutylene-styrene copolymer, a styrene-ethylenebutylene copolymer, a styrene-ethylenebutylene-olefin copolymer, a styrene-isoprene copolymer, a styrene-ethylene-isoprene copolymer, a styrene-isoprene-styrene copolymer, and a styrene-ethylene-isoprene-styrene copolymer, and chemical modified polymers such as hydrogenated polymers thereof, partially hydrogenated polymers thereof, maleic anhydride-modified products thereof, and epoxy-modified products thereof. Examples of styrene-butadiene rubber include a styrene-butadiene copolymer having a styrene content of 30% to 60% by mass, a hydrogenated or partially hydrogenated polymer thereof, and a maleic anhydride-modified or epoxy-modified product thereof. These may be used alone or in combination.

Examples of the polyolefin-based resin include polypropylene (homopolymer, block polymer, and random polymer), polypropylene-based thermoplastic elastomers, reactor-type polypropylene-based thermoplastic elastomers, dynamically cross-linked-type polypropylene-based thermoplastic elastomers, polyethylene (high-density polyethylene, linear low-density polyethylene, low-density polyethylene, and very low density polyethylene), an ethylene-vinyl acetate copolymer, an ethylene-methyl acrylate copolymer, an ethylene-methyl methacrylate copolymer, an ethylene-ethyl acrylate copolymer, an ethylene-ethyl methacrylate copolymer, an ethylene-propyl acrylate copolymer, an ethylene-butyl acrylate copolymer, ethylene-propylene rubber, ethylene acryl rubber, an ethylene-glycidyl methacrylate copolymer, an ethylene-methacrylic acid copolymer, an ethylene-methacrylic acid copolymer, and an ionomer resin in which a metal ion such as sodium or zinc bonds between molecules of an ethylene-acrylic acid copolymer. Resins obtained by modifying these resins with maleic anhydride etc., and resins having an epoxy group, an amino group, or an imide group may also be used.

Among the olefin-based resins, a carbonyl-group-containing ethylene-α olefin copolymer having a comonomer content of 9 to 46% by mass and a melt flow rate of 0.3 to 25 g/10 min has particularly high flame retardancy and thus the flame time can be shortened. Although the flame retardancy is improved with the increase in the comonomer content, the price of the resin rises with the comonomer content. Thus, considering the balance between the flame retardancy and the cost, the comonomer content is preferably 9 to 46% by mass.

A thermoplastic polyurethane elastomer is a polymer obtained by block-copolymerization of a hard segment, which is a polyurethane constituted by a condensation polymer of a diisocyanate such as tolylene diisocyanate and a short-chain diol such as polyethylene glycol, and a soft segment constituted by a bifunctional polyol or the like. Depending on the type of the bifunctional polyol constituting the soft segment, a polyether series that uses polytetramethylene glycol (PTMG), an adipate type, a caprolactone type, a polycarbonate type, etc., can be used. Of these, one having a JIS A hardness of 95 or less is preferably selected.

Examples of the thermoplastic polyamide elastomer include block copolymers constituted by a crystalline hard segment such as 6-nylon, 6,6-nylon, 11-nylon, or 12-nylon, and an amorphous soft segment such as polyoxymethylene glycol, e.g., polytetramethylene ether glycol.

Examples of the polyfunctional monomer include monomers having two or more carbon-carbon double bonds in a molecule such as monoacrylate series, diacrylate series, triacrylate series, monomethacrylate series, dimethacrylate series, trimethacrylate series, triallylisocyanurate series, and triallylcyanurate series. The polyfunctional monomer content is 1 to 20 parts by mass relative to 100 parts by mass of the thermoplastic resin.
At a content less than 1 part by mass, the cross-linking effect is not obtained and thus the heat deformation resistance and the heat resistance are deteriorated. At a content exceeding 20 parts by mass, some monomers remain unreacted and thus flame retardancy is deteriorated.

An antioxidant, a lubricant, a processing stabilizer, a coloring agent, a blowing agent, a strengthening agent, a filler, a granule agent, a metal inactivator, a silane coupling agent, etc., may be added as long as the flame retardancy, heat deformation resistance, and mechanical properties are not degraded. A metal hydroxide such as aluminum hydroxide, magnesium hydroxide, or calcium hydroxide and a nitrogen-based flame retardant such as melamine or melamine cyanurate may also be added.

In particular, use of a nitrogen-based flame retardant such as melamine or melamine cyanurate is preferred in order to further improve flame retardancy. The nitrogen-based flame retardant content is 3 to 100 parts by mass relative to 100 parts by mass of the thermoplastic resin. When the content is less than 3 parts by mass, the effect of improving the flame retardancy is little. When the content exceeds 100 parts by mass, the mechanical properties are degraded. An organic phosphorus-based flame retardant selected from the group consisting of a metal phosphinate, a melamine phosphate compound, an ammonium phosphate compound, and a polyphosphazene compound obtained by ring-opening polymerization of cyclophosphazene has a plasticizing effect and thus the flexibility is not lowered even when a nitrogen-based flame retardant is used in combination.

Particular amounts of the components described above are mixed by using a known mixer such as a single screw extrusion-type mixer, an open roll mixer, a pressure kneading machine, a Banbury mixer, a twin screw extruder, or the like to obtain a flame-retardant resin composition. Of these, a twin screw extruder is preferred since it has high kneading performance and productivity.

The insulated wire has a coating layer composed of the above-described flame-retardant resin composition and the coating layer is formed directly on the conductor or on another layer on the conductor. The insulating coating layer can be formed by using a known extruder such as a melt extruder. The insulating layer is preferably cross-linked by irradiation with ionizing radiation.

A highly conductive copper wire or aluminum wire can be used as the conductor. The diameter of the conductor may be adequately selected depending on the usage but is preferably 2 mm or less in order to enable wiring in narrow spaces. The diameter is preferably 0.1 mm or more from the viewpoint of handling ease. The conductor may be a single wire or a twisted cable constituted by two or more wires.

The thickness of the coating layer may be adequately selected depending on the diameter of the conductor. The thickness is preferably 0.1 mm to 2 mm from the viewpoints of the insulating property and the flame retardancy. Flexibility is improved when the thickness of the coating layer is small but the flame retardancy cannot be maintained if the thickness is excessively small. The insulated wire according to the present invention is advantageous in that the flame retardancy sufficient to pass the VW-1 flame test is obtained even when the thickness of the insulating layer as a whole is small.

The coating layer is preferably cross-linked by irradiation with an ionizing radiation since the mechanical strength is improved. Examples of the ionizing radiation source include an accelerated electron beam, a gamma ray, an X-ray, an α-ray and ultraviolet ray. Of these, an accelerated electron beam is most preferably used from the viewpoints of industrial utility such as ease of use of the beam source, penetration depth of the ionizing radiation, and a cross-linking rate.

A flat cable is obtained by arranging a plurality of conductors side-by-side spaced from one another in the insulating coating layer composed of the above-described flame-retardant resin composition. A conductive metal such as copper, tin-plated annealed copper, or nickel-plated annealed copper can be used as the conductor. The conductor preferably has a flat rectangular shape and a thickness of preferably 15 µm to 200 µm considering the flexibility of the flat cable although the thickness of the conductor depends on the amount of current used.

The flat cable may be formed by extrusion-molding the flame-retardant resin composition with conductors arranged side-by-side or by preliminarily forming two films composed of the flame-retardant resin composition, sandwiching conductors arranged side-by-side with the two films, and thermally bonding the films. The outer side of the insulating layer composed of the flame-retardant resin composition may be coated with a polymer film such as polyester, polyimide, or the like. As with the insulated wire, the insulating coating layer is preferably cross-linked by irradiation with ionizing radiation.

A molded article is obtained by inj ection-molding the flame-retardant resin composition. As with the insulated wire and the flat cable, the molded article obtained by injection molding is preferably cross-linked by irradiation with ionizing radiation to improve the heat resistance.

### EXAMPLES

Next, the present invention is described in further detail by using examples. Examples below do not limit the scope of the present invention. Note that "parts" in tables means "parts by mass" unless otherwise noted.

First, measurement and evaluation methods conducted in the examples below are described.

### (Mechanical properties)

Coating layers of an insulated wire and a flat cable were subjected to a stretching test (stretching speed = 500 mm/min, gauge length = 20 mm). The tensile strength (MPa) and the elongation at break (%) were measured using three samples each and the average thereof was calculated. A tensile strength of 10.4 MPa or more and an elongation at break of 150% were set as acceptable levels.

### (Heat resistance)

An insulated wire and a flat cable were left in a Geer oven set at 158°C for 168 hours (7 days) and then subjected to the same stretching test as one for evaluating mechanical properties. The results were compared with the tensile strength and elongation at break before the heat treatment. A 75% retention or higher with respect to the tensile strength and elongation at break before the heat treatment was set as the acceptable level.

### (Flame retardancy)

Five samples were used to conduct VW-1 vertical specimen flame test set forth in UL Standard 1581, paragraph 1080. Flame was applied to each sample for 15 seconds and removed and this was repeated for a total of five applications. Those samples which ceased to flame within 60 seconds, with which the absorbent cotton placed below was not ignited by droppings, and which did not burn or scorch the kraft paper placed above were assumed to be acceptable. If even one of the five samples failed to reach the acceptable level, that example was assumed to fail the test. The flame time (time from when application of flame is finished to when the flame was ceased) was measured on some of the samples.

### (Heat deformation resistance)

Heat deformation resistance was evaluated according to JIS C3005. An insulated wire or a flat cable was preheated in a thermostat set at 140°C for 1 hour. Then a jig having a diameter of 9.5 mm was pressed against the insulated wire or the flat cable to place a load of 500 g. The thickness of the insulating layer after being left in a 140°C thermostat for 1 hour under the load was measured and the retention relative to the thickness before deformation was calculated. A retention of 50% or more was set as an acceptable level.

### (Heat resistance with a conductor attached)

In the case of an insulated wire, a sample wound around a metal rod having a diameter equal to the diameter of the insulated wire was used. In the case of a flat cable, a sample bent in a Z shape (bent by 180 degrees at two places) was used. A sample were left in a Geer oven set at 158°C for 168 hours (7 days), and the appearance of the insulating layer was observed. Samples that had cracks or breaking were evaluated as not acceptable and those that did not show much change in appearance were evaluated as acceptable.

### (Examples 1 to 19 and Comparative Examples 1 to 10)

The materials were blended at ratios shown in Tables I to III. To each resulting mixture, 0.5 parts of oleamide and 3 parts by mass of pentaerythritol-tetrakis[3-(3,5-di-tert-butyl-4-hydroxyphenyl)propionate] were added relative to 100 parts of a base polymer and the resulting mixture was kneaded with a twin screw extruder having a die temperature set at 280°C. Strands of the kneaded material obtained were pelletized with a pelletizer and extruded to coat a conductor (prepared by twisting 17 tin-plated annealed copper wires 0.16 mm in diameter) by using a melt extruder (45 mm in diameter, L/D ratio = 24, compression ratio: 2.5, full-flight type) so that the thickness of the coating on the conductor was 0.4 mm. Then 250 kGy of an electron beam was applied at an acceleration voltage of 2 MeV to form an insulated wire. In Examples 8 and 9, a conductor prepared by twisting 7 tin-plated annealed copper wires 0.16 mm in diameter was used and the thickness of the coating was set to 0.27 mm. The mechanical properties, heat resistance, flame retardancy, heat deformation property, and heat resistance with a conductor attached of the obtained insulated wire were evaluated. Note that the mechanical properties and heat resistance were evaluated by removing the conductor from the insulated wire obtained so that only the coating layers were subjected to evaluation.

### (Examples 20 to 22 and Comparative Examples 11 to 18)

Flame-retardant resin compositions shown in Tables IV and V were used. Eight conductors (flat rectangular conductors 0.15 mm in thickness and 1.2 mm in width) were arranged side-by-side at 0.8 mm intervals (pitch: 2.0 mm) and each flame-retardant resin composition was extruded to coat both sides of the conductors so that the thickness of the coating was 0.2 mm. Then 250 kGy of an electron beam was applied at an acceleration voltage of 2 MeV to form a flat cable. Then a series of evaluation were conducted.

### (Examples 23 to 25 and Comparative Examples 19 to 21)

Flame-retardant resin compositions shown in Tables VI and VII were each extruded by a T-die extrusion technique onto a biaxially oriented polyester film (thickness: 12 µm) so that the thickness was 30 µm to prepare a polyester film-bonded tape. Twenty seven conductors (flat rectangular conductors 0.05 mm in thickness and 0.1 mm in width) were arranged side-by-side at 0.2 mm intervals (pitch: 0.3 mm) and two polyester film-bonded tapes were respectively placed on both sides of the conductors such that the polyester films faced outward. Then a thermolaminator was used to bond the two films and form a flat cable. A series of evaluation was then conducted. The mechanical properties and heat resistance were evaluated by preparing a film composed of the flame-retardant resin composition alone without a polyester film bonded thereto.

Flame-retardant resin compositions shown in Table VIII were each injection-molded by using SE18D produced by Sumitomo Heavy Industries, Ltd., (maximum clamping force: 176 N) into a JIS-3 dumbbell specimen having a thickness of 0.5 mm. Then a series of evaluation was conducted. "Heat resistance with a copper foil wound" was evaluated by winding a copper foil around a parallel portion at the center of the JIS-3 dumbbell specimen three times and placing the specimen in a Geer oven set at 158°C for 168 hours (7 days) for aging. Then the copper foil was removed and the portion previously covered with the copper foil was bent by 180 degrees. Specimens that underwent cracking or breaking were evaluated as not acceptable.

**[Table I]**

| Insulated wire | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Polyphenylene ether (*1): C-C double bond-containing polymer | | | 30 | | | 40 | | 40 | 40 | Flame-retardant resin composition of Example 1 | Flame-retardant resin composition of Example 5 |
| Polyphenylene ether (*2): C-C double bond-containing polymer | | | | 15 | | | 30 | | | | |
| Polystyrene (*3): C-C double bond-containing polymer | | | | 5 | 15 | | | | | | |
| Thermoplastic styrene-based elastomer (*4): C-C double bond-containing polymer | | | | 40 | 70 | 60 | | 40 | 40 | | |
| Thermoplastic styrene-based elastomer (*5): C-C double bond-containing polymer | | | 20 | | | | 30 | | | | |
| Polyolefin (*6): C-0 carbonyl group-containing polymer | | | 50 | 40 | | | 40 | | 20 | | |
| Polyolefin (*7): Saturated polymer | | | | | 15 | | | 20 | | | |
| Phosphorus-based compound (*8) | | | 40 | 60 | 95 | 50 | | 20 | 5 | | |
| Phosphorus-based compound (*9) | | | | | | | | 40 | | | |
| Phosphorus-based compound (*10) | | | | | | | 60 | | | | |
| Phosphate ester-based compound (*11) | | | 20 | 10 | 5 | | 10 | | 20 | | |
| Polyfunctional monomer (*12) | | | 5 | 7 | 15 | 10 | 5 | 5 | 5 | | |
| Exposure dose of electron beam (kGy) | | | 250 | 250 | 250 | 250 | 250 | 250 | 250 | | |
| Conductor used | | | Conductor including 17 tin-plated wires 0.16 mm in dia. | | | | | | | Conductor including 7 tin-plated wires 0.16 mm in dia. | |
| Thickness of coating | | | 0.4 mmt | | | | | | | | |
| Mechanical properties | Tensile strength (MPa) | | 16.0 | 17.0 | 18.5 | 20.0 | 16.5 | 19.5 | 21.5 | 17.5 | 17 |
| | Elongation (%) | | 360 | 290 | 325 | 275 | 270 | 290 | 280 | 340 | 260 |
| Heat resistance with conductor attached | 158°C × 7 days | Wound around a rod with the same diameter | Pass | Pass | Pass | Pass | Pass | Pass | Pass | Pass | Pass |
| Heat resistance (only | 158°C × 7 days | Tensile strength (MPa) | 15.5 | 15.0 | 16.5 | 14.0 | 15.0 | 18.5 | 19.0 | 16 | 15.5 |
| insulating part) | | Elongation (%) | 215 | 210 | 245 | 200 | 195 | 205 | 220 | 200 | 190 |
| Flame retardancy | Vertical specimen flame test (VW-1) (flame time: sec) | | Pass (20) | Pass (48) | Pass (39) | Pass (35) | Pass (33) | Pass (48) | Pass (53) | Pass (49) | Pass (50) |
| Thermal deformation property | 140°C * 500 g | Retention (%) | 72 | 67 | 72 | 78 | 69 | 65 | 70 | 68 | 65 |

| | | | | | | | | | | | |
|---|---|---|---|---|---|---|---|---|---|---|---|
| Ex.: Example | | | | | | | | | | | |

**[Table II]**

| Insulated wire | | | Ex. 10 | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|---|
| Thermoplastic styrene-based elastomer (*4) | | | 40 | 80 | | | | | | | | |
| Thermoplastic polyester-based elastomer (*13): C-C double bond, C-0 carbonyl group-containing polymer | | | | | 100 | 100 | 50 | | | | | 5 |
| Thermoplastic polyurethane-based elastomer (*14): C-O carbonyl group-containing polymer | | | | | | | | 40 | | | | |
| Thermoplastic polyamide-based elastomer (*15): C-O carbonyl group-containing polymer | | | | | | | | | 30 | | | |
| Polyolefin (*16): C-O carbonyl group-containing polymer | | | 60 | | | | 50 | 60 | 70 | 100 | 95 | |
| Polyolefin (*17): Saturated polymer | | | | 20 | | | | | | | 5 | 95 |
| Phosphorus-based compound (*18) | | | 50 | 90 | 80 | | 60 | | 20 | | | 50 |
| Phosphorus-based compound (*9) | | | | | | 95 | | | | 80 | 70 | |
| Phosphorus-based compound (*19) | | | | | | | | 40 | | | | |
| Phosphate ester-based compound (*23) | | | 20 | | | | 5 | 10 | 20 | | 10 | 10 |
| Polyfunctional monomer (*12) | | | 5 | 10 | 3 | 5 | 5 | 8 | 3 | 5 | 2 | 5 |
| Exposure dose of electron beam (kGy) | | | 250 | 250 | 250 | 250 | 250 | 250 | 250 | 250 | 250 | 250 |
| Conductor used | | | Conductor including 17 tin-plated wires 0.16 mm in dia. | | | | | | | | | |
| Thickness of coating | | | 0.4 mmt | | | | | | | | | |
| Mechanical properties | Tensile strength (MPa) | | 15.0 | 13.5 | 14.0 | 14.5 | 14.5 | 15.5 | 15 | 13.5 | 14.5 | 18 |
| | Elongation (%) | | 320 | 330 | 290 | 280 | 360 | 290 | 260 | 365 | 370 | 320 |
| Heat resistance with conductor attached | 158°C × 7 days | Wound around a rod with the same diameter | Pass | Pass | Pass | Pass | Pass | Pass | Pass | Pass | Pass | Pass |
| Heat resistance (only insulating part) | 158°C × 7 days | Tensile strength (MPa) | 14.5 | 13.0 | 13.5 | 15.0 | 14.0 | 14.5 | 16.5 | 12.5 | 14.4 | 16.5 |
| | | Elongation (%) | 240 | 280 | 220 | 220 | 230 | 200 | 175 | 330 | 300 | 280 |
| Flame retardancy | Vertical specimen time: sec) | flame test (VW-1) (flame | Pass (19) | Pass (39) | Pass (41) | Pass (45) | Pass (14) | Pass (25) | Pass (28) | Pass (27) | Pass (26) | Pass (48) |
| Thermal deformation property | 140°C * 500 g | Retention (%) | 68 | 70 | 65 | 65 | 63 | 65 | 70 | 66 | 65 | 70 |

| | | | | | | | | | | | | |
|---|---|---|---|---|---|---|---|---|---|---|---|---|
| Ex.: Example | | | | | | | | | | | | |

**[Table III]**

| Insulated wire | | | C.E. 1 | C.E. 2 | C.E. 3 | C.E. 4 | C.E. 5 | C.E. 6 | C.E. 7 | C.E. 8 | C.E. 9 | C.E. 10 |
|---|---|---|---|---|---|---|---|---|---|---|---|---|
| Polyphenylene ether (*1) | | | 25 | | | 35 | | | | | | |
| Polyphenylene ether (*2) | | | | 30 | 20 | | 20 | | | 20 | | |
| Thermoplastic polyester-based elastomer (*13) | | | | 30 | 60 | 65 | | 4 | 5 | | 100 | 50 |
| Thermoplastic styrene-based elastomer (*4) | | | 25 | | | | 40 | | | 40 | | |
| Polyolefin (*6) | | | 50 | 40 | | | 40 | | 95 | 40 | | 50 |
| Polyolefin (*20): Saturated polymer | | | | | 20 | | | 96 | | | | |
| Phosphorus-based compound (*8) | | | 105 | 4 | | | | 50 | 60 | 40 | | |
| Cyclic organic phosphorus-based compound (*21) | | | | | | 50 | | | | | | |
| Melamine cyanurate (*22) | | | | | | | 70 | | | | | |
| Phosphate ester-based compound (*11) | | | 20 | 10 | 40 | | 10 | 10 | 20 | 10 | 20 | 30 |
| Polyfunctional monomer (*12) | | | 5 | 7 | 15 | 10 | 5 | 5 | 22 | | 10 | 7 |
| Exposure dose of electron beam (kGy) | | | 250 | 250 | 250 | 250 | 250 | 250 | 250 | 250 | 250 | 250 |
| Conductor used | | | Conductor including 17 tin-plated wires 0.16 mm in dia. | | | | | | | | | |
| Thickness of coating | | | 0.4 mmt | | | | | | | | | |
| Mechanical properties | Tensile strength (MPa) | | 11.5 | 18.0 | 14.0 | 18.5 | 17.0 | 16.0 | 16.5 | 11.5 | 15 | 13.5 |
| | Elongation (%) | | 225 | 255 | 295 | 275 | 230 | 345 | 185 | 365 | 340 | 365 |
| Heat resistance with | 158°C × 7 days | Wound around a rod with | | | | | | | | Dissol | | |
| conductor attached | | the same diameter | Crack | Pass | Crack | Crack | Crack | Pass | Pass | ved | Crack | Crack |
| Heat resistance (only insulating part) | 158°C × 7 days | Tensile strength (MPa) | | | | | | | | Dissol | | |
| | | | 9.5 | 16.0 | 11.5 | 15.5 | 14.5 | 13.5 | 15 | ved | 12.5 | 11.5 |
| | | Elongation (%) | 75 | 220 | 210 | 230 | 155 | 270 | 130 | Dissol ved | 230 | 245 |
| Flame retardancy | Vertical specimen flame test (VW-1) | | Pass | Fail | Fail | Fail | Pass | Fail | Fail | Pass | Fail | Fail |
| Thermal deformation property | 140°C * 500 g | Retention (%) | 40 | 65 | 70 | 65 | 75 | 65 | 75 | 45 | 60 | 62 |

| | | | | | | | | | | | | |
|---|---|---|---|---|---|---|---|---|---|---|---|---|
| C.E.: Comparative Example (*1) Xyron WH100 produced by Asahi Kasei Chemicals Corporation (*2) Xyron X9102 produced by Asahi Kasei Chemicals Corporation (*3) HH102 produced by PS Japan Corporation (*4) Styrene-ethylenebutylene-styrene copolymer: Tuftec H1041 produced by Asahi Kasei Chemicals Corporation (styrene content: 30 wt%) (*5) Styrene-ethylene-butylene-olefin crystalline block polymer: DYNARON 4600P produced by JSR Corporation (styrene content: 20 wt%) (*6) Ethylene-ethyl acrylate: REXPEARL A1150 produced by Japan Polyethylene Corporation (15% EA) (*7) Very low density polyethylene: ENGAGE 8150 produced by Dow Chemical Japan Ltd. (MFR = 0.5 @ 190°C*2.16 kg, density = 0.868 g/cm³) (*8) Metal phosphinate: Exolit OP930 produced by Clariant KK) (*9) Melamine polyphosphate: Melapur 200 produced by Ciba Specialty (*10) Polyphosphazene: SPS-100 produced by Otsuka Chemical Co., Ltd. (*11) Condensed phosphate ester: PX-200 (P: 9.0%) produced by Daihachi chemical Industry Co., Ltd. (*12) Trimethylolpropane trimethacrylate: NK ester TMPT produced by Shin-Nakamura Chemical Co., Ltd. (*13) Random copolymer thermoplastic polyester elastomer: GriltexD 1652E GF (melting point: 85°C) produced by EMS-CHEMIE Ltd. (*14) Thermoplastic polyurethane elastomer: RESAMINE PL201 (ether series) (*15) Thermoplastic polyamide elastomer: Pebax2533 (melting point: 134°C) produced by Arkema Co. (*16) Ethylene-methylacrylate: ELVALOY AC 1125 produced by Dupont (25% MA, MFR = 0.5 @ 190°C*2.16 kg, comonomer content: 25 mass%) (*17) Very low density polyethylene: ENGAGE 8150 produced by Dow Chemical Japan Ltd. (MFR = 0.5 @ 190°C*2.16 kg, density = 0.868 g/cm³) (*18) Metal phosphinate: Exolit OP935 produced by Clariant KK (OP930 of a fine particle type) (*19) Polyphosphazene: SPB-100L produced by Otsuka Chemical Co., Ltd. (*20) Very low density polyethylene: ENGAGE 8411 produced by Dow Chemical Japan Ltd. (MFR = 18 @ 190°C * 2.16 kg, density = 0.880 g/cm³) (*21) Cyclic organic phosphorus-based flame retardant HCA-HQ-HS produced by Sanko Co., Ltd. (*22) Melapur MC15 produced by Ciba Speciality (*23) Condensed phosphate ester: PX-110 (P: 7.8%) produced by Daihachi chemical Industry Co., Ltd. (*24) MC6000 produced by Nissan Chemical Industries, Ltd. | | | | | | | | | | | | |

**[Table IV]**

| Flat cable | | | Ex. 20 | Ex. 21 | Ex. 22 |
|---|---|---|---|---|---|
| Flame-retardant resin composition | | | Flame-retardant resin composition of Example 1 | Flame-retardant resin composition of Example 2 | Flame-retardant resin composition of Example 5 |
| Exposure dose of electron beam (kGy) | | | 250 | 250 | 250 |
| Mechanical properties | Tensile strength (MPa) | | 16.5 | 17.5 | 18.5 |
| | Elongation (%) | | 340 | 290 | 260 |
| Heat resistance with conductor attached | 158°C × 7 days | Z bending | Pass | Pass | Pass |
| Heat resistance (only insulating part) | 158°C × 7 days | Tensile strength (MPa) | 15.0 | 16.0 | 17.0 |
| | | Elongation (%) | 220 | 235 | 220 |
| Flame retardancy | Vertical specimen flame test (VW-1) | | Pass | Pass | Pass |
| Thermal deformation property | 140°C ***** 500 g | Retention (%) | 68 | 65 | 70 |

| | | | | | |
|---|---|---|---|---|---|
| Ex.: Example | | | | | |

**[Table V]**

| Flat cable | | | C.E.11 | C.E.12 | C.E.13 | C.E.14 | C.E.15 | C.E.16 | C.E.17 | C.E.18 |
|---|---|---|---|---|---|---|---|---|---|---|
| Flame-retardant resin composition | | | Flame-retardant resin composition of Example C.E.1 | Flame-retardant resin composition of Example C.E.2 | Flame-retardant resin composition of Example C.E.3 | Flame-retardant resin composition of Example C.E.4 | Flame-retardant resin composition of Example C.E.5 | Flame-retardant resin composition of Example C.E.6 | Flame-retardant resin composition of Example C.E.7 | Flame-retardant resin composition of Example C.E.8 |
| Exposure dose of electron beam (kGy) | | | 250 | 250 | 250 | 250 | 250 | 250 | 250 | 250 |
| Mechanical properties | Tensile strength (MPa) | | 12.0 | 19.0 | 13.0 | 19.0 | 16.5 | 15.5 | 17 | 12 |
| | Elongation (%) | | 230 | 245 | 280 | 260 | 210 | 320 | 180 | 350 |
| Heat resistance with conductor attached | 158°C × 7 days | Z bending | Breaking | Pass | Breaking | Breaking | Breaking | Pass | Pass | Dissolved |
| Heat resistance (only insulating part) | 158°C × 7 days | Tensile strength (MPa) | 10.0 | 15.5 | 10.5 | 15.0 | 13.0 | 12.0 | 14 | Dissolved |
| | | Elongation (%) | 70 | 190 | 220 | 210 | 140 | 220 | 120 | Dissolved |
| Flame retardancy | Vertical specimen flame test (VW-1) | | Pass | Fail | Fail | Fail | Pass | Fail | Fail | Pass |
| Thermal deformation property | 140°C * 500 g | Retention (%) | 45 | 70 | 65 | 65 | 70 | 70 | 65 | 40 |

| | | | | | | | | | | |
|---|---|---|---|---|---|---|---|---|---|---|
| C.E.: Comparative Example | | | | | | | | | | |

**[Table VI]**

| Flat cable | | | Ex. 23 | Ex. 24 | Ex. 25 |
|---|---|---|---|---|---|
| Flame-retardant resin composition | | | Flame-retardant resin composition of Example 12 | Flame-retardant resin composition of Example 13 | Flame-retardant resin composition of Example 14 |
| Exposure dose of electron beam (kGy) | | | 250 | 250 | 250 |
| Mechanical | Tensile strength (MPa) | | 15.0 | 15.5 | 15.0 |
| properties | Elongation (%) | | 250 | 260 | 310 |
| Heat resistance with conductor attached | 158°C × 7 days | Z bending | Pass | Pass | Pass |
| Heat resistance (only insulating part) | 158°C × 7 days | Tensile strength (MPa) | 12.5 | 12.0 | 13.0 |
| | | Elongation (%) | 200 | 190 | 200 |
| Flame retardancy | Vertical specimen flame test (VW-1) | | Pass | Pass | Pass |
| Thermal deformation property | 140°C * 500 g | Retention (%) | 60 | 65 | 70 |

| | | | | | |
|---|---|---|---|---|---|
| Ex.: Example | | | | | |

**[Table VII]**

| Flat cable | | | C.E.19 | C.E.20 | C.E.21 |
|---|---|---|---|---|---|
| Thermoplastic polyester-based elastomer (*13): | | | 100 | 100 | 4 |
| Polyolefin (*17): Saturated polymer | | | | | 96 |
| Phosphorus-based compound (*18) | | | | | 50 |
| Phosphate ester-based compound (*23) | | | 80 | 40 | 10 |
| Melamine cyanurate (*24) | | | | 20 | |
| Polyfunctional monomer (*12) | | | | 3 5 | 5 |
| Exposure dose of electron beam (kGy) | | | 250 | 250 | 250 |
| Mechanical properties | Tensile strength (MPa) | | 15.0 | 13.0 | 14.5 |
| | Elongation (%) | | 280 | 270 | 340 |
| Heat resistance with conductor attached | 158°C × 7 days | Z bending | Fail due to breaking and separation from PET | Fail due to breaking and separation from PET | Pass |
| Heat resistance (only insulating part) | 158°C × 7 days | Tensile strength (MPa) | 11.5 | 14.0 | 13.5 |
| | | Elongation (%) | 210 | 190 | 220 |
| Flame retardancy | Vertical specimen | flame test (VW-1) | Fail | Pass | Fail |
| Thermal deformation property | 140°C * 500 g | Retention (%) | 70 | 70 | 75 |

| | | | | | |
|---|---|---|---|---|---|
| C.E.: Comparative Example | | | | | |

**[Table VIII]**

| Injection molded article (thickness: 0.5 mmt) | | | Ex. 26 | Ex. 27 | Ex. 28 |
|---|---|---|---|---|---|
| Flame-retardant resin composition | | | Flame-retardant resin composition of Example 1 | Flame-retardant resin composition of Example 2 | Flame-retardant resin composition of Example 5 |
| Exposure dose of electron beam (kGy) | | | 250 | 250 | 250 |
| Mechanical | Tensile strength (MPa) | | 13.5 | 14.0 | 14.5 |
| properties | Elongation (%) | | 290 | 240 | 210 |
| Heat resistance with conductor attached | 158°C × 7 days | | Pass | Pass | Pass |
| Heat resistance | 158°C × 7 days | Tensile strength (MPa) | 11.0 | 11.5 | 11.0 |
| | | Elongation (%) | 190 | 200 | 185 |
| Flame retardancy (strip) | Vertical burning test (UL94) | | V-1 | V-1 | V-1 |
| Thermal deformation property | 140°C * 500 g | Retention (%) | 70 | 75 | 70 |

| | | | | | |
|---|---|---|---|---|---|
| Ex.: Example | | | | | |

Insulated wires of Examples 1 to 19, flat cables of Examples 20 to 25, and molded articles of Examples 26 to 28 all satisfied the required properties in terms of mechanical properties, flame retardancy, heat resistance, heat deformation property, and heat resistance with a conductor attached.
In particular, Example 1 in which a polyphenylene ether, a styrene-based thermoplastic elastomer, and an ethylene-α olefin copolymer (polyolefin-based resin) having a carbonyl group were used as the thermoplastic resin had a flame time as short as 20 seconds and exhibited particularly high flame retardancy. Examples 1,10, and 14 to 18 in which 50 parts by mass or more of ethylene-α olefin copolymer having a carbonyl group was contained had a flame time of 30 seconds or shorter and exhibited high flame retardancy. In particular, the blend of Example 17 achieved good balance between properties although only one type of resin was used. When the number of types of resins to be mixed is large, shear stress must be applied during mixing to enhance the compatibility between the resins and thus the mixing is costly. Thus, using one type of resin is advantageous in that mixing is easy and the cost is low.

An insulated wire of Comparative Example 1 and a flat cable of Comparative Example 11 that uses the same resin composition had an organic phosphorus-based flame retardant (metal phosphinate) content as large as 105 parts by mass relative to 100 parts by mass of the thermoplastic resin. Thus, the heat resistance, the heat deformation property, and the heat resistance with a conductor attached were poor. Insulated wires of Comparative Examples 2, 3, 4, 9, and 10 and flat cables of Comparative Examples 12, 13, and 14 had a small organic phosphorus-based flame retardant content and thus the flame retardancy was not acceptable.

An insulated wire of Comparative Example 5 and a flat cable of Comparative Example 15 had acceptable flame retardancy but suffered from breaking and failed in terms of heat resistance with a conductor attached. An insulated wire of Comparative Example 6 and a flat cable of Comparative Example 16 contained as low as less than 5% by mass of the resin having a carbon-carbon unsaturated bond or a resin having a carbonyl group relative to the thermoplastic resin and thus the flame retardancy was not acceptable.

An insulated wire of Comparative Example 7 and a flat cable of Comparative Example 17 contained 22 pars by mass of the polyfunctional monomer, i.e., larger than 20 parts by mass, relative to 100 parts by mass of the thermoplastic resin. Thus, the elongation was low and the flame retardancy was unacceptable. An insulated wire of Comparative Example 8 and a flat cable of Comparative Example 18 did not contain any polyfunctional monomer and thus the heat resistance, the heat resistance with a conductor attached, and the heat deformation property were poor. An insulated wire of Comparative Example 10 and flat cables of Comparative Examples 19 and 20 did not contain a metal phosphinate, a melamine phosphate compound, an ammonium phosphate compound, or a polyphosphazene compound obtained by ring-opening polymerization of cyclophosphazene that acts as a highly flame retardant organic phosphorus-based flame retardant, but a phosphate ester only. Thus, the heat resistance with a conductor attached was not acceptable. Although the heat resistance with a conductor attached was at an acceptable level in Comparative Example 21, the flame retardancy was not acceptable due to a large saturated polymer content.

### (Examples 29 to 35)

The materials were blended at ratios shown in Table IX. To each resulting mixture, 0.5 parts of oleamide and 3 parts by mass of pentaerythritol-tetrakis [3-(3,5-di-tert-butyl-4-hydroxyphenyl)propionate] were added relative to 100 parts of a base polymer and the resulting mixture was kneaded with a twin screw extuder having a die temperature set at 280°C. Strands of the kneaded material obtained were pelletized with a pelletizer and extruded to coat a conductor (prepared by twisting 17 tin-plated annealed copper wires 0.16 mm in diameter) by using a melt extruder (45 mm in diameter, L/D ratio = 24, compression ratio: 2.5, full-flight type) so that the thickness of the coating on the conductor was 0.4 mm. Then an electron beam was applied at an acceleration voltage of 2 MeV to form an insulated wire. The mechanical property, heat resistance, flame retardancy, heat deformation property, and heat resistance with a conductor attached of the obtained insulated wire were evaluated. Note that the mechanical properties and heat resistance were evaluated by removing the conductor from the insulated wire obtained so that only the coating layers were subjected to evaluation.

**[Table IX]**

| Insulated wire | | | Ex. 29 | Ex. 30 | Ex. 31 | Ex. 32 | Ex. 33 | Ex. 34 | Ex. 35 |
|---|---|---|---|---|---|---|---|---|---|
| Thermoplastic polyester-based elastomer (*13): C-C double bond-, C-O carbonyl group-containing polymer | | | | | | 100 | 95 | 100 | |
| Thermoplastic polyurethane-based elastomer (*14): C-O carbonyl group-containing polymer | | | | | | | | | 100 |
| Thermoplastic styrene-based elastomer (*4): C-C double bond-containing polymer | | | 80 | | | | | | |
| Thermoplastic styrene-based elastomer (*5): C-C double bond-containing polymer | | | | 10 | 10 | | | | |
| Polyolefin (*16): C-O carbonyl group-containing polymer | | | | | | | 5 | | |
| Polyolefin (*6): C-O carbonyl group-containing polymer | | | | 90 | 80 | | | | |
| Polyolefin (*7): saturated polymer | | | 20 | | 10 | | | | |
| Phosphorus-based compound (*18) | | | | | | 40 | 60 | 50 | 20 |
| Phosphorus-based compound (*8) | | | 60 | 60 | 40 | 40 | | | |
| Phosphorus-based compound (*9) | | | | | 40 | | | | |
| Phosphorus-based compound (*10) | | | | | | | | | |
| Phosphate ester-based compound (*11) | | | | | | | | | |
| Melamine cyanurate (*24) | | | 30 | 40 | | | 30 | 4 | 97 |
| Polyfunctional monomer (*12) | | | 5 | 1 | 3 | 2 | 1 | 4 | 5 |
| Exposure dose of electron beam (kGy) | | | 250 | 100 | 150 | 100 | 150 | 250 | 120 |
| Conductor used | | | Conductor including 17 tin-plated wires 0.16 mm in dia. | | | | | | |
| Thickness of coating | | | 0.4 mmt | | | | | | |
| Mechanical properties | Tensile strength (MPa) | | 16.5 | 15.0 | 16.0 | 16.0 | 16.5 | 18.5 | 12.1 |
| | Elongation (%) | | 340 | 350 | 280 | 250 | 260 | 320 | 210 |
| Heat resistance with conductor attached | 158°C × 7 days | Wound around a rod with the same diameter | Pass | Pass | Pass | Pass | Pass | Pass | Pass |
| Heat resistance (only | 158°C × 7 days | Tensile strength (MPa) | 15.0 | 14.5 | 13.5 | 16.5 | 15.0 | 19.0 | 10.5 |
| insulating part) | | Elongation (%) | 290 | 300 | 240 | 230 | 240 | 290 | 165 |
| Flame retardancy | Vertical specimen flame test (VW-1) (flame time) | | Pass | Pass | Pass | Pass (18 sec) | Pass (10 Pass sec) | Pass(22 sec) | Pass (20 sec) |
| Thermal deformation property | 140°C * 500 g | Retention (%) | 68 | 67 | 70 | 63 | 64 | 70 | 80 |

| | | | | | | | | | |
|---|---|---|---|---|---|---|---|---|---|
| Ex.: Example | | | | | | | | | |

Insulated wires of Examples 29 to 35 all satisfied the required properties in terms of mechanical properties, flame retardancy, heat resistance, heat deformation property, and heat resistance with a conductor attached. Examples 33 to 35 in which an organic phosphorus-based flame retardant and a nitrogen-based flame retardant were used together had a flame time as short as 30 seconds or less and exhibited high flame retardancy.

### (Examples 36 to 38)

Flame-retardant resin compositions shown in Table X were used. Eight conductors (flat rectangular conductors 0.15 mm in thickness and 1.2 mm in width) were arranged side-by-side at 0.8 mm intervals (pitch: 2.0 mm) and each flame-retardant resin composition was extruded to coat both sides of the conductors so that the thickness of the coating was 0.2 mm. Then 250 kGy of an electron beam was applied at an acceleration voltage of 2 MeV to form a flat cable. Then a series of evaluation were conducted.

**[Table X]**

| Flat cable | | | Ex. 23 | Ex. 36 | Ex. 37 | Ex. 38 |
|---|---|---|---|---|---|---|
| Flame-retardant resin composition | | | Flame-retardant resin composition of Example 12 | Flame-retardant resin composition of Example 31 | Flame-retardant resin composition of Example 32 | Flame-retardant resin composition of Example 33 |
| Exposure dose of electron beam (kGy) | | | 250 | 100 | 150 | 150 |
| Mechanical properties | Tensile strength (MPa) | | 15.0 | 15.5 | 16.5 | 17.0 |
| | Elongation (%) | | 250 | 285 | 260 | 270 |
| Heat resistance with conductor attached | 158°C × 7 days | Z bending | Pass | Pass | Pass | Pass |
| Heat resistance (only | 158°C × 7 days | Tensile strength (MPa) | 12.5 | 14 | 16 | 16 |
| insulating part) | | Elongation (%) | 200 | 230 | 220 | 270 |
| Flame retardancy | Vertical specimen flame test (VW-1) (flame time: sec) | | Pass (46) | Pass (-) | Pass (22) | Pass (18) |
| Thermal deformation property | 140°C * 500 g | Retention (%) | 60 | 75 | 65 | 66 |

| | | | | | | |
|---|---|---|---|---|---|---|
| Ex.: Example | | | | | | |

For comparison purposes, the results of Example 23 in which only an organic phosphorus-based flame retardant was used are shown in Table X. Examples 37 and 38 in which flame-retardant resin compositions of Examples 32 and 33 containing both an organic phosphorus-based flame retardant and a nitrogen-based flame retardant were used had a flame time as short as 30 seconds or less and exhibited high flame retardancy.

### Industrial Applicability

As has been described above, according to the present invention, a flame-retardant resin composition that does not generate hydrogen halogenide gas during burning, and has high mechanical strengths (elongation and tensile strength), high heat deformation resistance, and high heat resistance, an insulated wire, a flat cable, and a molded article can be obtained which can be used in household electronic appliances such as electronic appliances, OA appliances, audio, video, DVDs, and Blu-ray, and internal wirings and parts of automobiles, ships, etc.

## Claims

1. A flame-retardant resin composition comprising a thermoplastic resin, a polyfunctional monomer, and an organic phosphorus-based flame retardant,
wherein the thermoplastic resin contains 5% by mass or more of a resin having a carbon-carbon unsaturated bond or a resin having a carbonyl group relative to the entire thermoplastic resin,
the organic phosphorus-based flame retardant is at least one selected from the group consisting of a metal phosphinate, a melamine phosphate compound, an ammonium phosphate compound, and a polyphosphazene compound obtained by ring-opening polymerization of cyclophosphazene, and
the content of the organic phosphorus-based flame retardant is 5 to 100 parts by mass relative to 100 parts by mass of the thermoplastic resin and the content of the polyfunctional monomer is 1 to 20 parts by mass relative to 100 parts by mass of the thermoplastic resin.

2. The flame-retardant resin composition according to Claim 1, wherein the thermoplastic resin contains 5% by mass or more of at least one selected from the group consisting of a polyphenylene ether-based resin, polyethylene terephthalate, polybutylene terephthalate, a thermoplastic polyester elastomer, a thermoplastic polyurethane elastomer, a styrene-based thermoplastic elastomer, a polystyrene-based resin, nylon, a thermoplastic polyamide elastomer, a polyolefin-based resin having a carbon-carbon unsaturated bond, and a polyolefin-based resin having a carbonyl group.

3. The flame-retardant resin composition according to Claim 1 or 2, wherein the thermoplastic resin contains 5 to 80% by mass of a polyphenylene ether-based resin or a polystyrene-based resin, 20 to 95% by mass of a styrene-based thermoplastic elastomer, and 0 to 70% by mass of a polyolefin-based resin.

4. The flame-retardant resin composition according to Claim 1 or 2, wherein the thermoplastic resin contains 50 to 100% by mass of an ethylene-α olefin copolymer having a carbonyl group and the ethylene-α olefin copolymer having a carbonyl group has a comonomer content of 9 to 46% by mass and a melt flow rate of 0.3 to 25 g/10 min.

5. The flame-retardant resin composition according to any one of Claims 1 to 4, further comprising 3 to 100 parts by mass of a nitrogen-based flame retardant relative to 100 parts by mass of the thermoplastic resin.

6. The flame-retardant resin composition according to Claim 5, wherein the nitrogen-based flame retardant is melamine cyanurate.

7. The flame-retardant resin composition according to any one of Claims 1 to 6, wherein a phosphate ester is further contained as the organic phosphorus-based flame retardant.

8. An insulated wire comprising a coating layer composed of the flame-retardant resin composition according to any one of Claims 1 to 7.

9. A flat cable comprising an insulating coating layer and a plurality of conductors spaced from one another and arranged side-by-side in the insulating coating layer, wherein the insulating coating layer is composed of the flame-retardant resin composition according to any one of Claims 1 to 7.

10. A molded article obtained by inj ection-molding the flame-retardant resin composition according to any one of Claims 1 to 7.

11. The insulated wire according to Claim 8, wherein the insulated wire passes a vertical specimen flame test (VW-1) set forth in UL standards.

12. The flat cable according to Claim 9, wherein the flat cable passes a vertical specimen flame test (VW-1) set forth in UL standards.
